## Europäisches Patentamt
## European Patent Office
## Office européen des brevets

(19)

(11) Veröffentlichungsnummer: **0 046 246**
**B1**

(12) **EUROPÄISCHE PATENTSCHRIFT**

(45) Veröffentlichungstag der Patentschrift:
17.04.85

(51) Int. Cl.⁴: **G 21 C 19/30**, G 21 D 1/02

(21) Anmeldenummer: **81106179.5**

(22) Anmeldetag: **07.08.81**

(54) **Einrichtung zur Entfernung von Wasserstoffgas aus dem Sicherheitsbehälter einer Kernreaktoranlage.**

(30) Priorität: **20.08.80 DE 3031378**

(43) Veröffentlichungstag der Anmeldung:
**24.02.82 Patentblatt 82/8**

(45) Bekanntmachung des Hinweises auf die Patenterteilung:
**17.04.85 Patentblatt 85/16**

(84) Benannte Vertragsstaaten:
**AT CH FR GB IT LI**

(56) Entgegenhaltungen:
**DE - A - 1 498 588**
**FR - A - 2 152 785**
**US - A - 3 658 996**
**US - A - 3 853 482**
**US - A - 4 019 871**

**NUCLEAR ENGINEERING INTERNATIONAL, Band 18, Nr. 208, 1973, Seiten 711-715 W.M. ROGERS et al.: "Catalytic recombiners for boiling water reactors"**

(73) Patentinhaber: **BROWN BOVERI REAKTOR GmbH, Dudenstrasse 44, D-6800 Mannheim 1 (DE)**

(72) Erfinder: **Stiefel, Max, Ing.grad., Thüringerstrasse 69, D-6800 Mannheim 31 (DE)**

(74) Vertreter: **Dahlmann, Gerhard, Dipl.-Ing. et al, c/o Brown Boveri & Cie., AG Zentralbereich ZPT/P Postfach 351, D-6800 Mannheim (DE)**

## Beschreibung

Die Erfindung betrifft eine Einrichtung zur Entfernung von Wasserstoffgas aus dem Sicherheitsbehälter einer Kernreaktoranlage unter Verwendung eines thermischen Rekombinators, der aus einem metallischen Gehäuse und darin angeordneten Umlenkblechen für den Gasstrom besteht sowie eine Zufuhrleitung für das wasserstoffangereicherte Gasgemisch und eine Abfuhrleitung für das wasserstoffarme Gasgemisch aufweist.

Eine derartige Einrichtung ist aus der US-PS 3 853 482 bekannt. Dort sind zur Erzielung der notwendigen Rekombinationstemperatur innerhalb des Rekombinatorgehäuses elektrische Heizspiralen angeordnet. Sie erfordern einen erheblichen Platzbedarf und führen zu einer unnötigen Vergrößerung des Gehäuses. Der größere Innenraum erfordert außerdem eine größere Heizleistung.

Aus der Druckschrift »Hydrogen Rekombiner System« der Firma Rockwell (Publication Nr. 523K−20 Rev. 8.79) ist ein Rekombinator bekanntgeworden, der in einem isolierten Raum zwei elektrische Heizelemente aufweist. Innerhalb dieses Raumes strömt das aus dem Sicherheitsbehälter herangeführte wasserstoffangereicherte Gasgemisch in einer großen Rohrspirale. Über die heiße Raumluft wird das Gasgemisch erwärmt und gelangt dann in die ebenfalls in diesem Raum angeordnete Reaktionskammer. Das nunmehr wasserstoffarme Gasgemisch verläßt über eine Leitung den isolierten Raum und gelangt, nachdem es seine Restwärme an einen Wärmetauscher abgegeben hat, wieder in den Sicherheitsbehälter. Auch diese Art der Beheizung erfordert einen großen Platzbedarf.

Die Erfindung stellt sich daher die Aufgabe bei einer Einrichtung der eingangs genannten Art die Heizquelle außerhalb des Gehäuses anzuordnen und trotzdem einen hohen Wärmeeintrag in den Innenraum des Gehäuses zu erzielen.

Gelöst wird die Aufgabe erfindungsgemäß dadurch, daß das Gehäuse wenigstens teilweise von einer wassergekühlten Induktionswicklung umgeben ist, daß die Wandung des Gehäuses und die Umlenkbleche induktiv erwärmt sind und daß die Umlenkbleche die Innenseite der Wandung des Gehäuses im Bereich der Induktionswicklung in einer Art Reibschlußverbindung kontakten, wodurch ein Wärmeeintrag in das Innere des Gehäuses erzielt ist.

Mit der raumsparenden induktiven Heizung wird ein verlustarmer, gleichmäßiger Wärmeeintrag bis zu den als statische Mischer wirkenden Umlenkblechen erzielt.

Gemäß einer bevorzugten Ausgestaltung ist das Gehäuse als länglicher Rohrkörper ausgebildet. Dabei ist zur Erhöhung des Wärmeeintrages im Bereich der Induktionswicklung zwischen den Umlenkblechen und der Innenseite der Wandung ein sowohl die Innenseite der Wandung als auch die Umlenkbleche kontaktendes Rohrstück angeordnet.

Eine zwischen dem Gehäuse und der Induktionswicklung vorgesehene Wärmeisolierung schützt zum einen das Gehäuse vor Wärmeverlust und zum anderen die Induktionswicklung vor einer zu hohen Wärmebelastung.

Anhand eines Ausführungsbeispiels und einer schematischen Zeichnung wird die Einrichtung beschrieben.

Aus dem Sicherheitsbehälter 1 einer nicht weiter dargestellten Kernreaktoranlage wird wasserstoffangereichertes Gasgemisch, das sich in unzulässiger Anreicherung dort gebildet hat, mit Hilfe des Gebläses 2 und der Zufuhrleitung 3 entnommen und in den Rekombinator 4 eingespeist. Das Gehäuse 5 des Rekombinators ist ein zylindrischer länglicher Rohrkörper, der an seinen beiden Enden halbkugelförmig verschlossen ist. In dem zylindrischen Teil des Gehäuses sind Umlenkbleche 6 aus nichtrostendem Stahl angeordnet, die als statische Mischelemente dienen. Die obere Hälfte des Gehäuses wird durch eine wassergekühlte Wicklung 7 induktiv geheizt. Dabei werden die Wirbelströme außer in der Gehäusewandung 8 auch in den Umlenkblechen 6 induziert, so daß eine homogene Temperaturverteilung gewährleistet ist. Eine am zylindrischen Teil des Gehäuses 5 angebrachte Isolierung 13 schützt gleichzeitig die Induktionswicklung vor einer zu hohen Wärmebelastung. Die Eigenerwärmung der Induktionswicklung wird über einen Kühlkreislauf 14 abgegeben. Der Kühlkreislauf ist mit Meßstellen 15, 16, einem Rekuperativwärmetauscher 17, einer Absperrarmatur 18 und einer Regelarmatur 19 ausgerüstet. Über Schnellschlußkupplung 20 ist er mit einem nicht dargestellten Leitungssystem verbunden. Im Bereich der Induktionswicklung 7 sind die Umlenkbleche 6 mit einem dickwandigen Rohrstück 9 verschweißt, das umfangsseitig eine Art Reibschlußverbindung mit der Innenseite der Gehäusewandung 8 eingeht und diese kontaktet. Durch diese innige Verbindung wird ein wirkungsvoller Wärmeeintrag erzielt. Die obere Hälfte des Rekombinators dient zur Aufheizung auf die Betriebstemperatur von 700−750° C. In der unteren Hälfte beträgt die Verweilzeit des heißen Gasgemisches zur vollständigen Reaktion ca. 0,5 sek. Eine homogene Temperaturverteilung wird durch entsprechende Ausbildung der Umlenkbleche erreicht. Bei einem Durchsatz von 180 m³/h (i. N.) sind für eine Gesamtverweilzeit von 1 sek. insgesamt ca. 50 Liter Gesamtvolumen des Rekombinators erforderlich. Dieses Volumen wird z. B. von einem Gehäuse 5 erreicht, das aus einem 1500 mm langen Rohr der Nennweite 250 mm besteht. Nach der erfolgten Verbrennung verläßt das nunmehr wasserstoffarme Gasgemisch den Rekombinator über die Abfuhrleitung 10. Mit Hilfe der Temperaturmeßstelle 11 wird die erforderliche Aufheizleistung der Induktionswicklung 7 gesteuert. Einen Teil seiner Wärme gibt das Gasgemisch beim Durchströmen eines Rekuperativwärmetauschers 12 ab. Dabei wird das in der Zufuhrleitung 3 fließende Gasgemisch vorgewärmt. Im Gegenstrom wird das in der Abfuhrleitung 3 befindliche Gasgemisch im Rekuperativwärmetauscher 17 auf 60 bis 65°C abgekühlt. Die im Kühlkreislauf für die Induktionswicklung, dem der Rekuperativwärmetauscher 17 zugeordnet ist, befindliche Regelarmatur 19 steuert die Durchflußmenge an Kühlmittel. Es läßt sich somit auf einfache Weise die gewünschte Temperatur des im Gegenstrom den Wärmetauscher 17 passierenden Gasgemisches einstellen. Das soweit abgekühlte Gasgemisch gelangt nunmehr zu einem fernbetätigt steuerbaren Dreiwegeventil 21. Von hier strömt der größte Teil des wasserstoffarmen Gasgemisches über den Abgang 22 des Dreiwegeventils und die Leitung 23 durch eine Flammensperre 34 zurück zum Sicherheitsbehälter 1. Der verbleibende Rest des Gasgemisches gelangt über die Verbindungsleitung 3a zur Zufuhrleitung 3 und dient zur Verdünnung des vom Sicherheitsbehälter herangeführten wasserstoffangereicherten Gasgemisches. Die Menge des von der Verbindungsleitung 3a herangeführten Gasgemisches hängt von dem Wasserstoffgehalt des aus dem Sicherheitsbehälter herangeführten Gasgemisches ab. Sie wird über das Dreiwegeventil so gesteuert, daß das zum Rekombinator hingeführte Gasgemisch immer unter 4 Vol.% Wasserstoffanteil liegt. Eine gefährliche Verpuffung wird somit mit Sicherheit verhindert. In der Zufuhrleitung 3 und der Verbindungsleitung 3a sind Durchflußmeßeinrichtungen 27, 28, Druckmeßeinrichtungen 29, 30, 31, Temperaturfühler 32, 33 und eine Flammensperre 34 eingebaut. Über eine nicht dargestellte Begleitheizung wird die Leitung 23 erwärmt, um das Gasgemisch auf einer Temperatur von 60—65°C zu halten. Damit wird sichergestellt, daß im Gasgemisch vor dem Erreichen des Sicherheitsbehälters kein Kondensat gebildet wird. Auch der Bereich der Zufuhrleitung 3 zwischen dem Sicherheitsbehälter 1 und dem Rekuperativwärmetauscher 12 wird mit einer nicht dargestellten Begleitheizung versehen. Die Temperatur der darin strömenden Gasmischung wird dadurch auf einem höheren Wert gehalten, als die innerhalb des Sicherheitsbehälters gemessene Temperatur. Mit dieser Maßnahme soll ebenso wie bei der Leitung 23 eventuell hoch radioaktiver Kondensatanfall außerhalb des Sicherheitsbehälters vermieden werden. Mit Hilfe der Anschlüsse 24, 25, die nur bis zu den Schnellschlußkupplungen 20 dargestellt und mit Absperrarmaturen 26 versehen sind, läßt sich mit einem flüssigen oder gasförmigen Spülmedium die Dekontamination der Einrichtung auf einfache Weise erzielen.

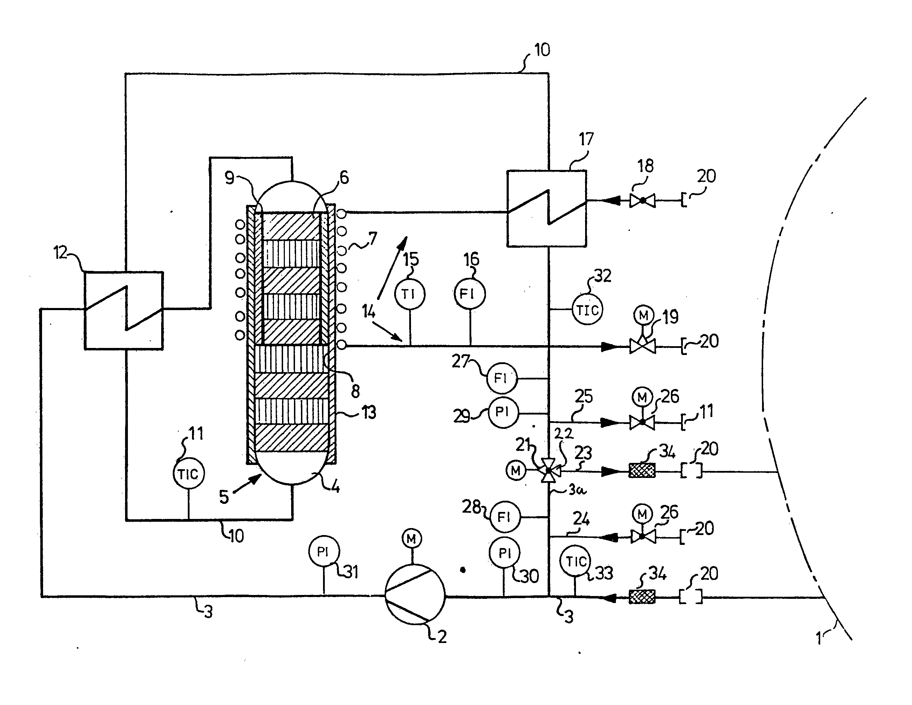

**Patentansprüche**

1. Einrichtung zur Entfernung von Wasserstoffgas aus dem Sicherheitsbehälter (1) einer Kernreaktoranlage unter Verwendung eines thermischen Rekombinators, der aus einem metallischen Gehäuse (5) und darin angeordneten Umlenkblechen (6) für den Gasstrom besteht sowie eine Zufuhrleitung (3) für das wasserstoffangereicherte Gasgemisch und eine Abfuhrleitung (10) für das wasserstoffarme Gasgemisch aufweist, dadurch gekennzeichnet, daß das Gehäuse (5) wenigstens teilweise von einer wassergekühlten Induktionswicklung (7) umgeben ist, daß die Wandung (8) des Gehäuses und die Umlenkbleche induktiv erwärmt sind und daß die Umlenkbleche (6) die Innenseite der Wandung (8) des Gehäuses im Bereich der Induktionswicklung in einer Art Reibschlußverbindung kontakten, wodurch ein Wärmeeintrag in das Innere des Gehäuses (5) erzielt ist.

2. Einrichtung nach Anspruch 1, dadurch gekennzeichnet, daß das Gehäuse (5) ein länglicher Rohrkörper ist und daß im Bereich der Induktionswicklung (7) zwischen den Umlenkblechen (6) und der Innenseite der Wandung (8) ein sowohl die Innenseite der Wandung als auch die Umlenkbleche kontaktendes Rohrstück (9) angeordnet ist.

3. Einrichtung nach Anspruch 1 oder 2, dadurch gekennzeichnet, daß zwischen dem Gehäuse (5) und der Induktionswicklung eine Wärmeisolierung (13) angebracht ist.

**Claims**

1. Device for removing hydrogen gas from the containment vessel (1) of a nuclear reactor installation, using a thermal recombiner which consists of a metallic casing (5) and baffles (6), arranged therein, for the gas stream and has a feed line (3) for the hydrogen-enriched gas mixture and a discharge line (10) for the hydrogen-depleted gas mixture, characterised in that the casing (5) is at least partially surrounded by a water-cooled induction winding (7), that the wall (8) of the casing and the baffles are inductively heated, and that the baffles (6) contact the inside of the wall (8) of the casing in the region of the induction winding in a kind of frictional connection, which results in the introduction of heat into the interior of the casing (5).

2. Device according to claim 1, characterised in that the casing (5) is an elongate pipe body and that a piece of pipe (9) contacting both the inside of the wall (8) and the baffles (6) is arranged in the region of the induction winding (7) between the baffles and the inside of the wall.

3. Device according to claim 1 or 2, characterised in that a heat insulation (13) is fitted between the casing (5) and the induction winding.

**Revendications**

1. Dispositif pour éliminer de l'hydrogène gazeux de la cuve de sécurité (1) d'une installation à réacteur nucléaire en utilisant un recombinateur thermique qui se compose d'un hoîtier métallique (5) et de chicanes (6) pour le flux gazeux incorporées dans ce boîtier, et présente un conduit (3) d'admission du mélange gazeux enrichi en hydrogène et un conduit (10) d'évacuation du mélange gazeux pauvre en hydrogène, caractérisé par le fait que le boîtier (5) est entouré au moins partiellement d'un enroulement inducteur (7) refroidi par de l'eau; par le fait que la paroi (8) du boîtier et les chicanes sont chauffées par induction; et par le fait que les chicanes (6) sont en contact avec la face interne de la paroi (8) du boîtier au voisinage de l'enroulement inducteur, par une sorte de solidarisation par friction, ce qui permet d'obtenir une pénétration de chaleur dans l'espace interne du boîtier (5).

2. Dispositif selon la revendication 1, caractérisé par le fait que le boîtier (5) est en corps tubulaire allongé; et par le fait qu'une pièce tubulaire (9), en contact tant avec la face interne de la paroi qu'avec les chicanes, est intercalée entre lesdites chicanes (6) et ladite face interne de la paroi (8), au voisinage de l'enroulement inducteur (7).

3. Dispositif selon la revendication 1 ou 2, caractérisé par le fait qu'une isolation thermique (13) est interposée entre le boîtier (5) et l'enroulement inducteur.